# EUROPEAN PATENT APPLICATION

(11) **EP 4 481 916 A1**
(43) Date of publication of application: **25.12.2024**
(21) Application number: 22953589.3
(22) Date of filing: 04.08.2022
(51) Int. Cl.: H01M 50/209, H01M 50/342

(54) **BATTERY AND ELECTRICAL DEVICE**

(71) Applicant: Contemporary Amperex Technology Co., Limited, Ningde, Fujian 352100 (CN)
(72) Inventor: CHEN, Xiaobo, Ningde, Fujian 352100 (CN); LI, Yao, Ningde, Fujian 352100 (CN); GU, Mingguang, Ningde, Fujian 352100 (CN)
(74) Representative: Thoma, Michael
(86) International application number: PCT/CN2022/110331
(87) International publication number: WO 2024/026780

(57) **Abstract**

Embodiments of this application provide a battery and an electric device. The battery includes: a box including an electrical chamber; a battery cell accommodated in the electrical chamber, where a pressure relief mechanism is disposed at a first wall of the battery cell; and an attachment structure attached to the first wall, where the attachment structure is provided with an avoidance region. The avoidance region is configured to provide a deformation space for the pressure relief mechanism of at least one battery cell, and the avoidance region satisfies 0.3≤S2/(n*S1)≤8.5, where S1 represents a projection area of the pressure relief mechanism in a direction perpendicular to the first wall, S2 represents a projection area of the avoidance region in the direction perpendicular to the first wall, n represents the number of pressure relief mechanisms corresponding to the avoidance region, and n is a positive integer. The battery and electric device of the embodiments of this application can improve safety performance of batteries.

## Description

### TECHNICAL FIELD

This application relates to the field of battery technologies, and in particular, to a battery and an electric device.

### BACKGROUND

With the continuous advancement of battery technology, various new energy industries using batteries as energy storage devices have experienced rapid development. In the development of battery technology, safety is another non-negligible issue in addition to performance improvement. If the safety of a battery cannot be guaranteed, the battery cannot be used. Therefore, how safety performance of batteries is enhanced is an urgent technical problem that needs to be solved in battery technology.

### SUMMARY

Embodiments of this application provide a battery and an electric device, aiming to improve safety performance of batteries.

According to a first aspect, a battery is provided, including: a box including an electrical chamber; a battery cell accommodated in the electrical chamber, where a pressure relief mechanism is disposed at a first wall of the battery cell; and an attachment structure attached to the first wall, where the attachment structure is provided with an avoidance region. The avoidance region is configured to provide a deformation space for the pressure relief mechanism of at least one battery cell, and the avoidance region satisfies 0.3≤S2/(n*S1)≤8.5, where S1 represents a projection area of the pressure relief mechanism in a direction perpendicular to the first wall, S2 represents a projection area of the avoidance region in the direction perpendicular to the first wall, n represents the number of pressure relief mechanisms corresponding to the avoidance region, and n is a positive integer.

Therefore, the battery in the embodiments of this application can achieve improved safety through a proper setting of the area of the avoidance region of the attachment structure. Specifically, an excessively small S2/(n*S1) may result in a large area of the pressure relief mechanism but a small area of the avoidance region corresponding to the pressure relief mechanism. This may cause that the avoidance region fails to provide a sufficient deformation space for the pressure relief mechanism, causing the pressure relief mechanism to be at least partially shielded by the avoidance region and unable to act normally, and accordingly causing a failure in timely discharge of internal emissions of the battery cell. In addition, in a case that the pressure relief mechanism can act normally, a small area of the avoidance region may cause that the emissions cannot be quickly discharged through the avoidance region, to be specific, there is a difficulty in discharging emissions at the avoidance region, and this also causes a failure in timely discharge of the internal emissions of the battery cell. Therefore, such two cases may both cause heat diffusion after thermal runaway of the battery cell, and even cause explosion of a battery, compromising the safety of the battery.

On the contrary, an excessively large S2/(n*S1) may result in an excessively small area of the pressure relief mechanism or an excessively large area of the avoidance region corresponding to the pressure relief mechanism. An excessively small area of the pressure relief mechanism results in the internal emissions of the battery cell not being discharged out of the battery cell quickly and in a timely manner. This in turn may lead to thermal runway within the battery cell, causing heat diffusion and resulting in an explosion of the battery, compromising the safety of the battery. An excessively large area of the avoidance region reduces stiffness and strength of the attachment structure where the avoidance region is located and affects performance of the attachment structure, for example, may affect support of the attachment structure for the battery cell.

In some embodiments, the avoidance region satisfies 0.8≤S2/(n*S1)≤4, allowing for a proper setting of the area of the pressure relief mechanism, thereby allowing emissions of the battery cell to be discharged in a timely manner through the pressure relief mechanism. The area of the avoidance region is not excessively small, so as to avoid affecting normal action of the pressure relief mechanism and discharge of the emissions. In addition, the area of the avoidance region is not excessively large, so that the strength and stiffness of the attachment structure where the avoidance region is located are guaranteed, thereby improving the safety and stability of the battery.

In some embodiments, a value range of the projection area S1 of the pressure relief mechanism in the direction perpendicular to the first wall is [50 mm², 3000 mm²]. An excessively large area S1 results in an excessively large area of the pressure relief mechanism at the first wall, reducing strength of the first wall, that is, reducing strength of a housing of the battery cell, and in turn affecting structural strength and stability of the battery cell. On the contrary, an excessively small area S 1 results in an excessively small area of the pressure relief mechanism. During thermal runaway of the battery cell, emissions need to be discharged through the pressure relief mechanism. Therefore, an excessively small area of the pressure relief mechanism results in a failure in timely discharge of the emissions of the battery cell, and this may cause heat diffusion between battery cells and even cause explosion of the battery.

In some embodiments, the projection area S2 of the avoidance region in the direction perpendicular to the first wall satisfies 50 mm²≤S2/n≤10000 mm². An excessively large value of S2/n results in an excessively large area of a zone of the avoidance region corresponding to one pressure relief mechanism, increasing a total area of the avoidance region on the attachment structure and in turn affecting strength of the attachment structure, for example, affecting support of the attachment structure for the battery cell and in turn affecting the structural strength and stability of the battery. On the contrary, an excessively small value of S2/n results in an excessively small area of a zone of the avoidance region corresponding to one pressure relief mechanism, so that the pressure relief mechanism may be at least partially shielded, affecting normal action of the pressure relief mechanism and causing incapability of providing a sufficient deformation space for the pressure relief mechanism, thereby affecting discharge of emissions from the battery cell, easily causing heat diffusion between battery cells, and even causing explosion of the battery.

In some embodiments, the avoidance region corresponds to multiple pressure relief mechanisms. Each avoidance region corresponds to multiple pressure relief mechanisms, so that the number of the avoidance regions provided can be reduced, allowing for convenient processing. In addition, during assembly, the pressure relief mechanism and the avoidance region do not need to be arranged in one-to-one correspondence, reducing the difficulty in assembly.

In some embodiments, the electrical chamber includes a second wall. The first wall faces the second wall. The pressure relief mechanism of the battery cell faces the second wall of the electrical chamber rather than faces another battery cell. In this way, an avoidance structure can be conveniently disposed at a wall of the electrical chamber to provide a deformation avoidance space for the pressure relief mechanism. As a result, space utilization of the battery can be improved, the risk of thermal runaway of a battery cell caused by thermal runaway of another battery cell can be reduced, and thus the safety of the battery is improved.

In some embodiments, the attachment structure includes the second wall. A proper setting of the area of the avoidance region on the second wall can make emissions be discharged quickly in a timely manner and prevent heat diffusion and explosion, thereby improving the safety of the battery.

In some embodiments, the avoidance region includes a through hole running through the second wall along a thickness direction of the second wall. The through hole is used for allowing emissions discharged from the pressure relief mechanism to be discharged out of the electrical chamber through the through hole upon actuation of the pressure relief mechanism. The avoidance region including the through hole provided in the second wall allows for convenient processing. In addition, the through hole provides a deformation space for the pressure relief mechanism and can also allow the emissions discharged from the pressure relief mechanism to be discharged through the through hole quickly.

In some embodiments, the second wall is provided with a sealing structure. The sealing structure is configured to seal the through hole, and the sealing structure is configured to be damaged upon actuation of the pressure relief mechanism, so as to allow the emissions to pass through the through hole.

With consideration that when the avoidance region includes the through hole, the pressure relief mechanism is exposed, so during use of the battery, the pressure relief mechanism is susceptible to external environmental influence, thus resulting in failure of the pressure relief mechanism. Therefore, with the sealing structure provided, airtightness of the electrical chamber can be maintained and the pressure relief mechanism is protected from external environment influence during normal use of the battery cell. In addition, during thermal runaway of the battery cell, the sealing structure can be damaged in a timely manner to expose the through hole, so that emissions of the battery cell can pass through the through hole to be discharged out of the electrical chamber, preventing thermal runaway, thereby improving the safety of the battery.

In some embodiments, the sealing structure is disposed at a surface of the second wall facing the first wall, and/or the sealing structure is disposed at a surface of the second wall away from the first wall. When the sealing structure is disposed at a surface of the second wall away from the first wall, a distance between the pressure relief mechanism and the sealing structure can provide a deformation space for actuation of the pressure relief mechanism, thereby avoiding affecting the pressure relief mechanism. When the sealing structure is disposed at a surface of the second wall facing the first wall, the sealing structure is close to the pressure relief mechanism and can be quickly damaged by emissions of the pressure relief mechanism. For example, the sealing structure can be quickly melted through a quick response to temperature of the battery cell, thereby avoiding affecting the actuation of the pressure relief mechanism and allowing the emissions to be discharged in a timely manner.

In some embodiments, the avoidance region includes a groove, having an opening facing the pressure relief mechanism, of the second wall. The groove is used to be damaged upon actuation of the pressure relief mechanism, such that the emissions discharged from the pressure relief mechanism pass through the second wall to be discharged out of the electrical chamber. With the opening of the groove facing the pressure relief mechanism, a deformation space can be provided in the groove for the pressure relief mechanism, allowing for convenient actuation of the pressure relief mechanism and discharge of the emissions.

In some embodiments, the battery further includes a connecting structure, where the connecting structure is disposed between the first wall and the second wall, and the attachment structure includes the connecting structure. With the connecting structure disposed between the first wall and the second wall, relative fixation of the first wall and the second wall as well as airtightness between the first wall and the second wall can be implemented through the connecting structure when no thermal runaway occurs in the battery cell. In addition, the attachment structure may include the connecting structure, to be specific, the connecting structure includes the avoidance region, so that the pressure relief mechanism can be prevented from being shielded by the connecting structure, thereby allowing for convenient smooth discharge of the emissions.

In some embodiments, the connecting structure is provided with an avoidance opening corresponding to the pressure relief mechanism, and the avoidance region includes the avoidance opening. The avoidance opening can provide a deformation space for actuation of the pressure relief mechanism, so as to prevent the connecting structure from shielding the pressure relief mechanism while such shielding causes untimely actuation of the pressure relief mechanism. In addition, the emissions passing through the pressure relief mechanism can be quickly discharged through the avoidance opening.

In some embodiments, the connecting structure is configured to prevent the emissions discharged from the pressure relief mechanism from entering the electrical chamber upon actuation of the pressure relief mechanism. The connecting structure may serve as a sealing member. Especially upon actuation of the pressure relief mechanism, the connecting structure is located between the first wall and the second wall, such that the emissions can be prevented from entering the electrical chamber through the connecting structure. In this way, the emissions passing through the pressure relief mechanism can be directly discharged out of the electrical chamber after separately passing through the avoidance opening of the connecting structure and the second wall, so that heat diffusion or even explosion caused by a short circuit of the battery cell in the electrical chamber after the emissions enter the electrical chamber is prevented, and centralized collection of the emissions can be achieved, allowing for convenient centralized treatment of the emissions, preventing the emissions from affecting other components in the battery, and improving the safety of the battery.

In some embodiments, the connecting structure is configured to discharge the emissions discharged from the pressure relief mechanism into the electrical chamber upon actuation of the pressure relief mechanism. This reduces airtightness requirements of the connecting structure and allows for convenient implementation. In addition, some of the emissions are discharged into the electrical chamber through the connecting structure, and meanwhile some of the emissions pass through the connecting structure and the second wall to be discharged out of the electrical chamber, increasing the discharge speed, reducing the risk of explosion of the battery, and also implementing directional and dispersive discharge, thereby preventing the emissions from affecting other components and improving the safety and stability of the battery.

In some embodiments, the connecting structure is provided with a flow channel. The flow channel is configured to discharge the emissions discharged from the pressure relief mechanism into the electrical chamber upon actuation of the pressure relief mechanism. The emissions discharged from the pressure relief mechanism can be discharged into the electrical chamber through the flow channel. In this way, a proper position setting of the flow channel can implement directional discharge of the emissions and reduce influence of the emissions on some components in the electrical chamber, thereby improving the safety of the battery.

In some embodiments, the connecting structure is configured to be damaged upon actuation of the pressure relief mechanism, such that a gap is formed between the first wall and the second wall, where the gap is used for discharging the emissions discharged from the pressure relief mechanism into the electrical chamber. Material of the connecting structure is properly selected to obtain an appropriate melting point of the connecting structure, allowing the connecting structure to be damaged upon actuation of the pressure relief mechanism so as to form a gap, such that the emissions are discharged into the electrical chamber. In this way, the connecting structure does not need to be provided with an additional structure, achieving higher simplicity and also guaranteeing airtightness of the battery cell during normal use.

In some embodiments, the battery further includes: a collection chamber configured to collect emissions from the first battery cell upon actuation of the pressure relief mechanism. The collection chamber may implement centralized collection and/or treatment of the emissions and then discharge the emissions out of the battery. For example, the collection chamber may contain liquid such as a cooling medium or is provided with a component for accommodating the liquid, so as to further cool the emissions that enter the collection chamber.

In some embodiments, the battery further includes an isolating component configured to isolate the electrical chamber from the collection chamber. The electrical chamber and the collection chamber are isolated by the isolating component. In other words, the electrical chamber accommodating the battery cell and a busbar is separated from the collection chamber collecting the emissions, thereby preventing interaction therebetween.

In some embodiments, the isolating component is formed as at least a part of the second wall. In this way, the emissions passing through the pressure relief mechanism may be discharged out of the electrical chamber through the isolating component, for example, may be directly discharged into the collection chamber.

According to a second aspect, an electric device is provided and includes the battery according to the first aspect, where the battery is configured to provide electrical energy for the electric device.

In some embodiments, the electric device may be a vehicle, a ship, or a spacecraft.

### BRIEF DESCRIPTION OF DRAWINGS

FIG. 1 is a schematic structural diagram of a vehicle according to an embodiment of this application;
FIG. 2 is a schematic structural diagram of a battery according to an embodiment of this application;
FIG. 3 is a schematic structural exploded view of a battery according to an embodiment of this application;
FIG. 4 is a schematic partial structural diagram of a battery according to an embodiment of this application;
FIG. 5 is a schematic partial structural diagram of another battery according to an embodiment of this application;
FIG. 6 is a schematic partial structural diagram of still another battery according to an embodiment of this application;
FIG. 7 is a schematic structural diagram of another battery according to an embodiment of this application;
FIG. 8 is a schematic structural diagram of still another battery according to an embodiment of this application;
FIG. 9 is a schematic structural exploded view of another battery according to an embodiment of this application; and
FIG. 10 is a schematic partial structural diagram of another battery according to an embodiment of this application.

The accompanying drawings are not drawn to scale.

### DESCRIPTION OF EMBODIMENTS

The following further describes embodiments of this application in detail with reference to the accompanying drawings and examples. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the embodiments of this application, the same reference signs denote the same components, and for brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is applied on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (PP), polyethylene (PE), or the like. In addition, the electrode assembly may be a wound structure or a laminated structure. However, the embodiments of this application are not limited thereto.

For the development of battery technologies, many design factors need to be considered, for example, performance parameters such as energy density, cycle life, discharge capacity, and charge and discharge rate, as well as safety of the battery. For batteries, safety hazards mainly originate in charging and discharging. Therefore, in order to improve the safety performance of batteries, a pressure relief mechanism is often provided for battery cells. The pressure relief mechanism is an element or part that is actuated when the internal pressure or temperature of the battery cell reaches a predetermined threshold, so as to relieve the internal pressure or temperature of the battery cell. The predetermined threshold may be adjusted according to different design requirements. For example, the predetermined threshold may depend on the material used for one or more of a positive electrode plate, a negative electrode plate, an electrolyte, and a separator in the battery cell. The pressure relief mechanism may employ an element or part sensitive to pressure or temperature such that the pressure relief mechanism is actuated when the internal pressure or temperature of the battery cell reaches the predetermined threshold, thereby forming a channel for relieving the internal pressure or temperature.

For the pressure relief mechanism, a sufficient deformation space is required for actuation. The deformation space refers to an internal or external space of the pressure relief mechanism in an actuation direction (that is, a damage direction) upon actuation of the pressure relief mechanism (for example, when the pressure relief mechanism is at least partially damaged). Therefore, how this deformation space is arranged is particularly important for the pressure relief mechanism.

The embodiments of this application provide a battery and an electric device. The battery includes a box, a battery cell, and an attachment structure, where the battery cell is accommodated in an electrical chamber of the box, a pressure relief mechanism is disposed at a first wall of the battery cell, and the attachment structure is attached to the first wall. The attachment structure is provided with an avoidance region. The avoidance region is configured to provide a deformation space for the pressure relief mechanism of at least one battery cell, and the avoidance region satisfies 0.3≤S2/(n*S1)≤8.5, where S1 represents a projection area of the pressure relief mechanism in a direction perpendicular to the first wall, S2 represents a projection area of the avoidance region in the direction perpendicular to the first wall, n represents the number of pressure relief mechanisms corresponding to the avoidance region, and n is a positive integer. The safety of the battery can be improved through a proper setting of the area of the avoidance region.

An excessively small S2/(n*S 1) may result in a large area of the pressure relief mechanism but a small area of the avoidance region corresponding to the pressure relief mechanism. This may cause that the avoidance region fails to provide a sufficient deformation space for the pressure relief mechanism, causing the pressure relief mechanism to be at least partially shielded by the avoidance region and unable to act normally, and accordingly causing a failure in timely discharge of internal emissions of the battery cell. In addition, in a case that the pressure relief mechanism can act normally, a small area of the avoidance region may cause that the emissions cannot be quickly discharged through the avoidance region, to be specific, there is a difficulty in discharging emissions at the avoidance region, and this also causes a failure in timely discharge of the internal emissions of the battery cell. Therefore, such two cases may both cause heat diffusion after thermal runaway of the battery cell, and even cause explosion of a battery, compromising the safety of the battery.

On the contrary, an excessively large S2/(n*S1) may result in an excessively small area of the pressure relief mechanism or an excessively large area of the avoidance region corresponding to the pressure relief mechanism. An excessively small area of the pressure relief mechanism results in the internal emissions of the battery cell not being discharged out of the battery cell quickly and in a timely manner. This in turn may lead to thermal runway within the battery cell, causing heat diffusion and resulting in an explosion of the battery, compromising the safety of the battery. An excessively large area of the avoidance region reduces stiffness and strength of the attachment structure where the avoidance region is located and affects performance of the attachment structure, for example, may affect support of the attachment structure for the battery cell.

The technical solutions described in the embodiments of this application are all applicable to a variety of electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

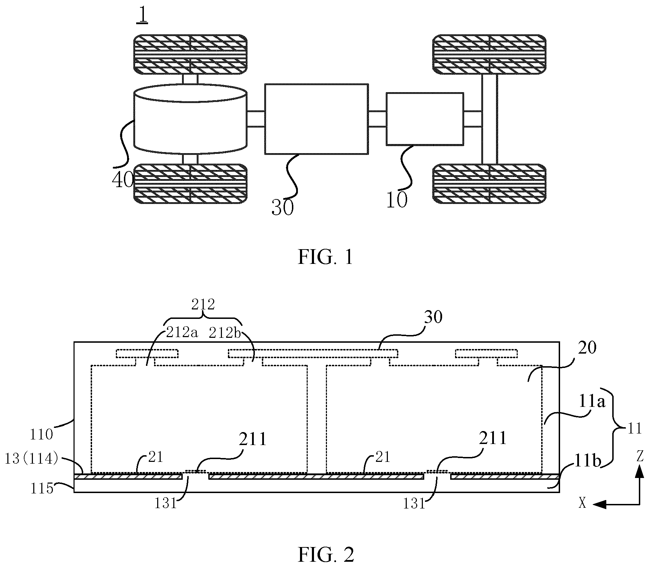

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 for use in a circuit system of the vehicle 1, for example, to satisfy power needs of start, navigation, and running of the vehicle 1. In another embodiment of this application, the battery 10 may be used not only as the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be referred to as a battery pack. For example, multiple battery cells may be connected in series, parallel, or series-parallel to form a battery module first, and then multiple battery modules are connected in series, parallel, or series-parallel to form a battery. In other words, the multiple battery cells may be directly combined into a battery, or may first be combined into battery modules that are then combined into a battery.

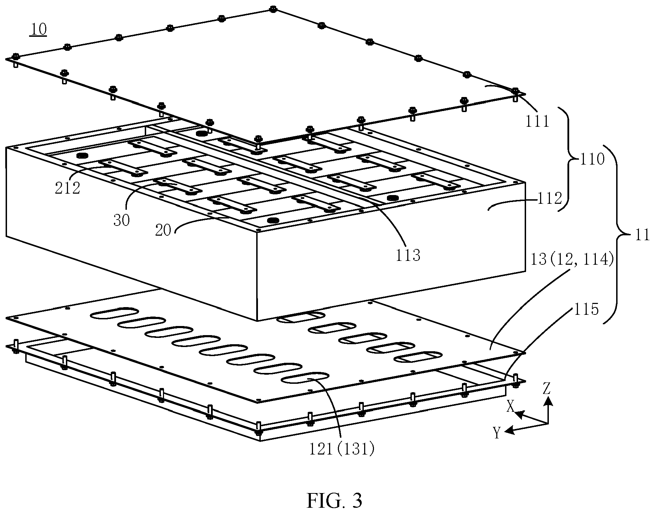

FIG. 2 is a schematic structural diagram of a battery 10 according to an embodiment of this application, and FIG. 3 is a schematic structural exploded view of a battery 10 according to an embodiment of this application, for example, the battery 10 shown in FIG. 3 may be the battery 10 shown in FIG. 2. As shown in FIG. 2 and FIG. 3, the battery 10 in this embodiment of this application may include: a box 11 including an electrical chamber 11a; a battery cell 20 accommodated in the electrical chamber 11a, where a pressure relief mechanism 211 is disposed at a first wall 21 of the battery cell 20; and an attachment structure 13 attached to the first wall 21, where the attachment structure 13 is provided with an avoidance region 131. The avoidance region 131 is configured to provide a deformation space for the pressure relief mechanism 211 of at least one battery cell 20, and the avoidance region 131 satisfies 0.3≤S2/(n*S1)≤8.5, where S1 represents a projection area of the pressure relief mechanism 211 in a direction perpendicular to the first wall 21, S2 represents a projection area of the avoidance region 131 in the direction perpendicular to the first wall 21, n represents the number of pressure relief mechanisms 211 corresponding to the avoidance region 131, and n is a positive integer.

It should be understood that as shown in FIG. 2 and FIG. 3, the electrical chamber 11a of the box 11 of this embodiment of this application is configured to accommodate at least one battery cell 20, to be specific, the electrical chamber 11a provides a mounting space for the battery cell 20. The electrical chamber 11a may be sealed or unsealed. The shape of the electrical chamber 11a may be determined according to one or multiple battery cells 20 that are to be accommodated. For example, in FIG. 2 and FIG. 3, the electrical chamber 11a being a cuboid is used as an example, but this embodiment of this application is not limited thereto.

It should be understood that, the pressure relief mechanism 211 in this embodiment of this application is configured to be actuated when internal pressure or temperature of the battery cell 20 reaches a predetermined threshold, so as to relieve the internal pressure or temperature. A value of the threshold varies with different design requirements. The threshold may depend on the material used for one or more of a positive electrode plate, a negative electrode plate, an electrolyte, and a separator in the battery cell 20.

"Actuate" mentioned in this application means that the pressure relief mechanism 211 is put into action or is activated to a given state such that the internal pressure and temperature of the battery cell 20 are relieved. The action that the pressure relief mechanism 211 is put into may include but is not limited to, for example, cracking, breaking, tearing, or opening at least part of the pressure relief mechanism 211. Upon actuation of the pressure relief mechanism 211, high-temperature and high-pressure substances inside the battery cell 20 are discharged as emissions from an actuated site. In this way, the battery cell 20 can relieve its pressure and temperature under controllable pressure or temperature, thereby avoiding more serious potential incidents.

The emissions from the battery cell 20 mentioned in this application include but are not limited to: electrolyte, fragments of positive and negative electrode plates and separator that are dissolved or disrupted, and high-temperature and high-pressure gases and flames produced by reactions.

The pressure relief mechanism 211 in this embodiment of this application is disposed at the first wall 21 of the battery cell 20. The pressure relief mechanism 211 may be a part of the first wall 21, or a structure separated from the first wall 21 and fixed to the first wall 21 through, for example, welding. For example, when the pressure relief mechanism 211 is a part of the first wall 21, for example, the pressure relief mechanism 211 may be formed by providing indentation on the first wall 21, and thickness of the first wall 21 corresponding to the indentation is less than thickness of another region other than the indentation in the pressure relief mechanism 211. The indentation is the weakest position of the pressure relief mechanism 211. When internal pressure rises and reaches a threshold due to excessive gas produced by the battery cell 20, or when internal temperature of the battery cell 20 rises and reaches a threshold due to heat produced by internal reactions of the battery cell 20, the pressure relief mechanism 211 may be broken at the indentation, causing the inside and the outside of the battery cell 20 to be communicated and causing the gas pressure and temperature to be discharged out through breakage of the pressure relief mechanism 211, thereby preventing the battery cell 20 from exploding.

For another example, the pressure relief mechanism 211 and the first wall 21 may be separated structures. The pressure relief mechanism 211 may be in a form of an explosion-proof valve, a gas valve, a pressure relief valve, a safety valve, or the like, and may specifically employ an element or part sensitive to pressure or temperature. To be specific, when the internal pressure or temperature of the battery cell 20 reaches a predetermined threshold, the pressure relief mechanism 211 performs an action or a weak structure disposed in the pressure relief mechanism 211 is destroyed, thereby forming an opening or a channel for relieving the internal pressure or temperature.

It should be understood that the attachment structure 13 in this embodiment of this application being attached to the first wall 21 may include: the attachment structure 13 being in direct contact with the first wall 21, or the attachment structure 13 being indirectly fixed to the first wall 21. For example, the attachment structure 13 may be a structure that is in direct contact with the first wall 21 and fixed to the first wall 21 face to face. For another example, the attachment structure 13 may alternatively be indirectly fixed to the first wall 21 through another structure such as an adhesive or a connecting structure, and this embodiment of this application is not limited thereto.

In this embodiment of this application, the attachment structure 13 is provided with an avoidance region 131. The avoidance region 131 satisfies 0.3≤S2/(n*S1)≤8.5, such that the safety of the battery is improved by a proper setting of the area of the avoidance region 131.

Specifically, an excessively small S2/(n*S1), for example, being less than 0.3, may result in a large area of the pressure relief mechanism 211 but a small area of the avoidance region 131 corresponding to the pressure relief mechanism 211. This may cause that the avoidance region 131 fails to provide a sufficient deformation space for the pressure relief mechanism 211, causing the pressure relief mechanism 211 to be at least partially shielded by the avoidance region 131 and unable to act normally, and accordingly causing a failure in timely discharge of internal emissions of the battery cell 20. In addition, in a case that the pressure relief mechanism 211 can act normally, a small area of the avoidance region 131 may cause that the emissions cannot be quickly discharged through the avoidance region 131, to be specific, there is a difficulty in discharging emissions at the avoidance region 131, and this also causes a failure in timely discharge of the internal emissions of the battery cell 20. Therefore, such two cases may both cause heat diffusion after thermal runaway of the battery cell 20, and even cause explosion of the battery 10, compromising the safety of the battery 10.

On the contrary, an excessively large S2/(n*S1), for example, being greater than 8.5, may result in an excessively small area of the pressure relief mechanism 211 or an excessively large area of the avoidance region 131 corresponding to the pressure relief mechanism 211. An excessively small area of the pressure relief mechanism 211 results in the internal emissions of the battery cell 20 not being discharged out of the battery cell 20 quickly and in a timely manner. This in turn may lead to thermal runway within the battery cell 20, causing heat diffusion and resulting in an explosion of the battery 10, compromising the safety of the battery 10. An excessively large area of the avoidance region 131 reduces stiffness and strength of the attachment structure 13 where the avoidance region 131 is located and affects performance of the attachment structure 13, for example, may affect support of the attachment structure 13 for the battery cell 10.

Therefore, a value of S2/(n*S1) in this embodiment of this application should not be excessively large or excessively small. For example, S2/(n*S1) is typically set to be 0.3, 0.8, 1, 1.5, 1.8, 2, 2.5, 3, 3.5, 4, 4.5, 5, 5.5, 6, 6.5, 7, 7.5, 8, or 8.5. For another example, the avoidance region 131 satisfies 0.8≤S2/(n*S1)≤4, such that the area of the pressure relief mechanism 211 is properly set, allowing emissions of the battery cell 20 to be discharged in a timely manner through the pressure relief mechanism 211. The area of the avoidance region 131 is not excessively small, so as to avoid affecting normal action of the pressure relief mechanism 211 and discharge of the emissions. In addition, the area of the avoidance region 131 is not excessively large, so that the strength and stiffness of the attachment structure 13 where the avoidance region 131 is located are guaranteed, thereby improving the safety and stability of the battery 10.

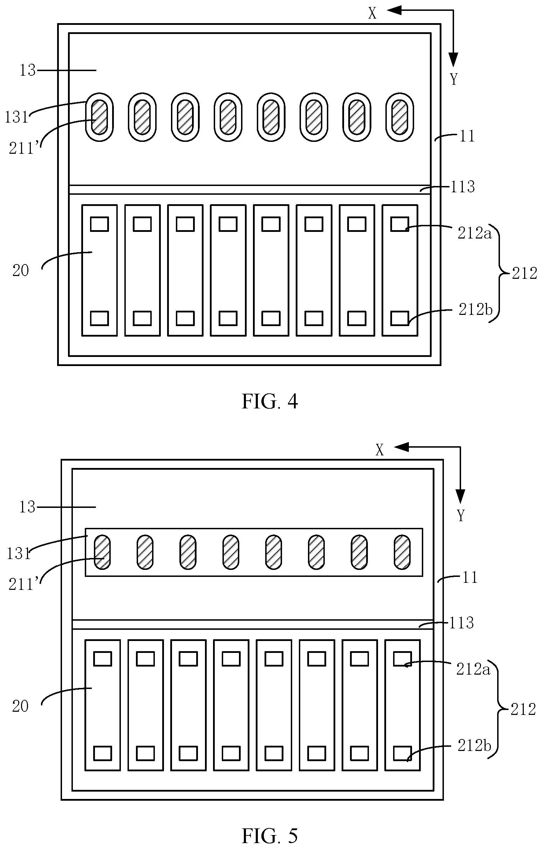

FIG. 4 to FIG. 6 are respectively several possible schematic partial structural diagrams of a battery 10 according to an embodiment of this application. As shown in FIG. 4 to FIG. 6, the electrical chamber 11a of the box 11 of the battery 10 including multiple battery cells 20 is used as an example. Specifically, the electrical chamber 11a may include multiple groups of battery cells 20 arranged along a second direction Y. For example, in FIG. 4 to FIG. 6, the electrical chamber 11a including two groups of battery cells 20 is used as an example, and each group of battery cells 20 includes multiple battery cells 20 arranged along a first direction X, for example, in FIG. 4 to FIG. 6, each group of battery cells 20 including 8 battery cells 20 is used as an example. It should be understood that the first direction X is perpendicular to the second direction Y In addition, in this embodiment of this application, the first direction X and the second direction Y being both perpendicular to a third direction Z is used as an example, where the third direction Z may be a height direction of the box 11 of the battery 10.

As shown in FIG. 4 to FIG. 6, to clearly illustrate a correspondence between the pressure relief mechanism 211 of the battery cell 20 and the avoidance region 131 of the attachment structure 13, FIG. 4 to FIG. 6 show a schematic diagram of only one group of battery cells 20 and do not show the other group of battery cells 20. Specifically, in this embodiment of this application, a projection of the pressure relief mechanism 211 in a direction perpendicular to the first wall 21 is denoted as 211'. For example, in this embodiment of this application, the direction perpendicular to the first wall 21 being the third direction Z is used as an example, and the projection 211' of the pressure relief mechanism 211 on the attachment structure 13 in the direction perpendicular to the first wall 21 is used as an example. Similarly, in a case that a projection of the avoidance region 131 in the direction perpendicular to the first wall 21 being a projection on the attachment structure 13 is used as an example, the projection is the avoidance region 131 itself. Therefore, in this application, the projection of the avoidance region 131 in the direction perpendicular to the first wall 21 is also denoted as 131.

It should be understood that the attachment structure 13 in this embodiment of this application may be provided with at least one avoidance region 131, and each avoidance region 131 may correspond to a pressure relief mechanism 211 of at least one battery cell 20. In addition, each battery cell 20 being provided with one pressure relief mechanism 211 is used as an example in this embodiment of this application.

Optionally, as shown in FIG. 4, the attachment structure 13 in this embodiment of this application may be provided with multiple avoidance regions 131, and the multiple avoidance regions 131 are in one-to-one correspondence with the pressure relief mechanisms 211 of multiple battery cells 20, in other words, each avoidance region 131 corresponds to one pressure relief mechanism 211. In this way, each pressure relief mechanism 211 is provided with one corresponding avoidance region 131, and there may be no corresponding avoidance region 131 between adjacent pressure relief mechanisms 211, reducing a total area of the avoidance regions 131 on the attachment structure 13, thereby enhancing the strength and stiffness of the attachment structure 13 and improving the stability of the battery 10.

Optionally, as shown in FIG. 5, unlike that shown in FIG. 4, the attachment structure 13 in this embodiment of this application may alternatively be provided with at least one avoidance region 131, and each avoidance region 131 corresponds to multiple pressure relief mechanisms 211. In this way, each avoidance region 131 corresponds to multiple pressure relief mechanisms 211, so that the number of the avoidance regions 131 provided can be reduced, allowing for convenient processing. In addition, during assembly, the pressure relief mechanism 211 and the avoidance region 131 do not need to be arranged in one-to-one correspondence, reducing the difficulty in assembly.

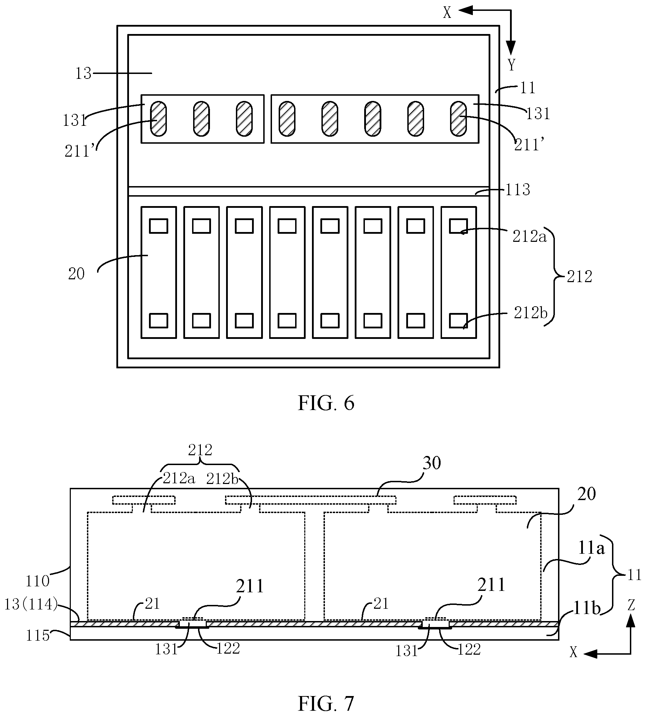

Optionally, as shown in FIG. 5 and FIG. 6, the attachment structure 13 may be provided with multiple avoidance regions 131, each avoidance region 131 may correspond to one or multiple pressure relief mechanisms 211, and different avoidance regions 131 may correspond to a same number or different number of pressure relief mechanisms 211. Specifically, as shown in FIG. 5, the multiple avoidance regions 131 may correspond to a same number of pressure relief mechanisms 211, for example, each avoidance region 131 corresponds to pressure relief mechanisms 211 of one group of battery cells 20 so as to facilitate processing. Alternatively, as shown in FIG. 6, the multiple avoidance regions 131 may correspond to a different number of pressure relief mechanisms 211, for example, if there are a large number of the group of battery cells 20 arranged along a first direction X, it is possible to configure that the multiple avoidance regions 131 correspond to one group of battery cells 20, and each avoidance region 131 may correspond to a different number of pressure relief mechanisms 211, such that a total area of the avoidance regions 131 on the attachment structure 13 is small, enhancing the strength and stiffness of the attachment structure 13 and improving the stability of the battery 10.

As shown in FIG. 2 to FIG. 6, the shape of the avoidance region 131 in this embodiment of this application may be set based on practical application, for example, the shape of the avoidance region 131 may be set according to the shape and number of the corresponding pressure relief mechanism 211. For example, if the avoidance region 131 is in one-to-one correspondence with the pressure relief mechanism 211, the shape of the avoidance region 131 may be consistent with that of the pressure relief mechanism 211. For another example, if the avoidance region 131 corresponds to multiple pressure relief mechanisms 211, the avoidance region 131 may be rectangular so as to facilitate processing, but this embodiment of this application is not limited thereto.

It should be understood that as shown in FIG. 2 to FIG. 6, a value range of an area S1 of the projection 211' of the pressure relief mechanism 211 in the direction perpendicular to the first wall 21 may be set based on practical application. For example, an excessively large area S1 results in an excessively large area of the pressure relief mechanism 211 at the first wall 21, reducing strength of the first wall 21, that is, reducing strength of a housing of the battery cell 20, and in turn affecting structural strength and stability of the battery cell 20. On the contrary, an excessively small area S1 results in an excessively small area of the pressure relief mechanism 211. During thermal runaway of the battery cell 20, emissions need to be discharged through the pressure relief mechanism 211. Therefore, an excessively small area of the pressure relief mechanism 211 results in a failure in timely discharge of the emissions of the battery cell 20, and this may cause heat diffusion within battery cells 20 and even cause explosion of the battery 10.

Therefore, the area S1 should not be excessively large or excessively small. For example, a value range of the area S1 of the projection 211' of the pressure relief mechanism 211 in the direction perpendicular to the first wall 21 is [50 mm², 3000 mm²]. For another example, the value range of the area S1 may be set to be [200 mm², 1500 mm²] so as to allow for better performance of the pressure relief mechanism 211. Specifically, the area S1 is typically set to be 50 mm², 100 mm², 150 mm², 200 mm², 250 mm², 300 mm², 350 mm², 400 mm², 450 mm², 500 mm², 600 mm², 630 mm², 700 mm², 800 mm², 850 mm², 900 mm², 1000 mm², 1100 mm², 1300 mm², 1500 mm², 1800 mm², 2000 mm², 2500 mm², 2800 mm², or 3000 mm².

It should be understood that in this embodiment of this application, the projection area S2 of the avoidance region 131 in the direction perpendicular to the first wall 21 may alternatively be set based on practical application. In addition, a value of the area S2 is related to the number of the pressure relief mechanisms 211 corresponding to the avoidance region 131. Specifically, a value of S2/n is set properly to adjust the area of the avoidance region 131. For example, an excessively large value of S2/n results in an excessively large area of a zone of the avoidance region 131 corresponding to one pressure relief mechanism 211, increasing a total area of the avoidance region 131 on the attachment structure 13 and in turn affecting strength of the attachment structure 13, for example, affecting support of the attachment structure 13 for the battery cell 20 and in turn affecting the structural strength and stability of the battery 10. On the contrary, an excessively small value of S2/n results in an excessively small area of a zone of the avoidance region 131 corresponding to one pressure relief mechanism 211, so that the pressure relief mechanism 211 may be at least partially shielded, affecting normal action of the pressure relief mechanism 211 and causing incapability of providing a sufficient deformation space for the pressure relief mechanism 211, thereby affecting discharge of emissions from the battery cell 20, easily causing heat diffusion within battery cells 20, and even causing explosion of the battery 10.

Therefore, the area S2 should not be excessively large or excessively small. For example, the projection area S2 of the avoidance region 131 in the direction perpendicular to the first wall 21 satisfies 50 mm²≤S2/n≤10000 mm². For another example, the area S2 further satisfies 250 mm²≤S2/n≤6000 mm². Specifically, a value of S2/n is typically set to be 50 mm², 100 mm², 150 mm², 200 mm², 250 mm², 300 mm², 350 mm², 400 mm², 450 mm², 500 mm², 600 mm², 700 mm², 800 mm², 900 mm², 1000 mm², 1200 mm², 1500 mm², 1920mm², 2000 mm², 2380mm², 3000 mm², 4000 mm², 5000 mm², 5500 mm², 6000 mm², 7000 mm², 8000 mm², 9000 mm², or 10000 mm².

The foregoing describes a correspondence between the avoidance region 131 of the attachment structure 13 and the pressure relief mechanism 211 in this embodiment of this application, and the following describes in detail the attachment structure 13 in this embodiment of this application with reference to the accompanying drawings.

As shown in FIG. 2 to FIG. 5, the box 11 in this embodiment of this application includes an electrical chamber 11a. The electrical chamber 11a may be configured to accommodate the battery cell 20. In addition, the electrical chamber 11a may further be configured to accommodate other components, for example, to accommodate a busbar 30, to be specific, the electrical chamber 11a provides a mounting space for the battery cell 20 and the busbar 30. The busbar 30 is configured to implement electrical connection between multiple battery cells 20, for example, connection in parallel, in series, or in series-parallel. The busbar 30 may implement the electrical connection between the battery cells 20 by connecting electrode terminals 212 of the battery cells 20. In some embodiments, the busbar 30 may be fixed to the electrode terminals 212 of the battery cells 20 through welding.

In this embodiment of this application, each battery cell 20 may include at least two electrode terminals 212. The at least two electrode terminals 212 include at least one positive electrode terminal 212a and at least on negative electrode terminal 212b, respectively. In this embodiment of this application, the electrode terminal 212 is configured to be electrically connected to a tab of an electrode assembly in the battery cell 20 so as to output electrical energy.

It should be understood that each electrode terminal 212 in this embodiment of this application may be disposed at any wall, and the multiple electrode terminals 212 may be disposed at a same wall or different walls of the battery cell 20. For example, as shown in FIG. 2 to FIG. 6, in an example in which each battery cell 20 includes two electrode terminals 212, the two electrode terminals 212 may be located at a same wall. Specifically, the two electrode terminals 212 may be located at a wall opposite the first wall 21, so that the two electrode terminals 212 are not affected or are affected slightly upon actuation of the pressure relief mechanism 211 at the first wall 21, thereby avoiding a short circuit between the battery cells 20. Alternatively, unlike that shown in FIG. 2 to FIG. 6, the two electrode terminals 212 included in the battery cell 20 may be located at another wall, and this embodiment of this application is not limited thereto.

For another example, still in an example in which each battery cell 20 includes two electrode terminals 212, unlike that shown in FIG. 2 to FIG. 6, the two electrode terminals 212 may be located at different walls. For example, the two electrode terminals 212 of the battery cell 20 may be separately located at two opposite walls of the battery cell 20. Alternatively, the two electrode terminals 212 of the battery cell 20 may be located at two intersected walls, and this embodiment of this application is not limited thereto.

Optionally, as shown in FIG. 2 to FIG. 6, with regard to a difference in the electrical chamber 11a, the box 11 in this embodiment of this application may further include a collection chamber 11b for collecting and/or processing emissions discharged through the pressure relief mechanism 211 upon actuation of the pressure relief mechanism 211. For example, the collection chamber 11b may be used to collect emissions from the battery cell 20 upon actuation of the pressure relief mechanism 211 and then discharge the emissions out of the battery 10. The collection chamber 11b is used to collect emissions, and may be sealed or unsealed. In some embodiments, the collection chamber 11b may contain air or other gases. Optionally, the collection chamber 11b may also contain liquid such as a cooling medium or is provided with a component for accommodating the liquid, so as to further cool the emissions that enter the collection chamber 11b. Further optionally, the gas or liquid in the collection chamber 11b flows circularly.

Optionally, as shown in FIG. 2 to FIG. 6, the battery 10 in this embodiment of this application further includes an isolating component 114 configured to isolate the electrical chamber 11a from the collection chamber 11b. The "isolate" herein means separation, which may be unsealed. Specifically, the isolating component 114 is used to isolate the electrical chamber 11a from the collection chamber 11b, in other words, the electrical chamber 11a for accommodating the battery cell 20 is separated from the collection chamber 11b for collecting the emissions.

In this embodiment of this application, the isolating component 114 may have a wall shared by the electrical chamber 11a and the collection chamber 11b. As shown in FIG. 2 to FIG. 6, the isolating component 114 (or a part) may directly serve as the wall shared by the electrical chamber 11a and the collection chamber 11b. In this way, a distance between the electrical chamber 11a and the collection chamber 11b can be furthest reduced, space is saved, and space utilization of the box 11 is improved.

Optionally, the isolating component 114 in this embodiment of this application may be a thermal management component, and the thermal management component is configured to adjust temperature of the battery cell 20. Specifically, the isolating component 114 may be configured to accommodate a fluid to adjust the temperature of the battery cell 20. In a case of cooling the battery cell 20, the isolating component 114 may accommodate a cooling medium to adjust the temperature of the battery cell 20. In this case, the isolating component 114 may also be referred to as a cooling component, a cooling system, a cooling plate, or the like. In addition, the isolating component 114 may further be configured for heating. This is not limited in this embodiment of this application. Optionally, the fluid in the isolating component 114 may flow circularly to achieve a better temperature adjustment effect.

It should be understood that the box 11 in this embodiment of this application may be implemented in various manners. This is not limited in this embodiment of this application. For example, FIG. 2 and FIG. 6 are used as an example, for the electrical chamber 11a, the box 11 may include a first cover body 110 having an opening, and the isolating component 114 covers the opening of the first cover body 110. In this way, walls for forming the electrical chamber 11a include the first cover body 110 and the isolating component 114. The first cover body 110 may also be implemented in various manners. For example, the first cover body 110 may be a hollow integrated structure having an opening in one end. Alternatively, the first cover body 110 may include a first portion 111 and a second portion 112 that has two opposite sides each having an opening, where the first portion 111 covers the opening of one side of the second portion 112 to form the first cover body 110 having an opening in one end, while the isolating component 114 covers the opening of the other side of the second portion 112 to form the electrical chamber 11a. With regard to the corresponding collection chamber 11b, the box 11 may further include a protective component 115. The protective component 115 is configured to protect the isolating component 114, and the protective component 115 can form the collection chamber 11b with the isolating component 114, to be specific, walls of the collection chamber 11b include the protective component 115 and the isolating component 114.

For another example, unlike the manner shown in FIG. 2 to FIG. 6, the box 11 may alternatively include a closed second cover body. The second cover body may be configured to form the electrical chamber 11a, or the isolating component 114 is disposed in the cover body to obtain the electrical chamber 11a in the cover body through isolation or to further obtain the collection chamber 11b through isolation. The second cover body may also be implemented in various manners. For example, the second cover body may include a third portion and a fourth portion. The fourth portion has an opening in one side to form a semi-closed structure, the isolating component 114 is disposed in the fourth portion, and the third portion covers the opening of the fourth portion to form a closed second cover body.

For ease of description, the box 11 shown in FIG. 2 to FIG. 6 is mainly used as an example for description in this application, but this embodiment of this application is not limited thereto. Specifically, the battery 10 in this embodiment of this application may include a box 11. The box 11 includes a first cover body 110, an isolating component 114, and a protective component 115, where the first cover body 110 and the isolating component 114 may be configured to form an electrical chamber 11a, and the isolating component 114 and the protective component 115 may be configured to form a collection chamber 11b. The first cover body 110 further includes a first portion 111 and a second portion 112 that has two opposite sides each having an opening, where the first portion 111 is configured to cover the opening of one side of the second portion 112 to form the first cover body 110 having an opening in one end, while the isolating component 114 is configured to cover the opening of the other side of the second portion 112 to form the electrical chamber 11a.

In this embodiment of this application, the electrical chamber 11a has multiple walls, the pressure relief mechanism 211 is disposed at a first wall 21 of a battery cell 20, and the first wall 21 may be any wall of the battery cell 20 facing the electrical chamber 11a. It should be understood that the shape of the battery cell 20 in this embodiment of this application may be set based on practical application. For example, a rectangular battery cell 20 is mainly used as an example for description in this application, but this embodiment of this application is not limited thereto, for example, the battery cell 20 may alternatively be a cylinder or of another shape. The first wall 21 is any wall of the battery cell 20.

In this embodiment of this application, as shown in FIG. 2 to FIG. 6, the electrical chamber 11a includes a second wall 12, where the first wall 21 faces the second wall 12. Specifically, the pressure relief mechanism 211 of the battery cell 20 faces the second wall 12 of the electrical chamber 11a rather than faces another battery cell 20. In this way, an avoidance structure can be conveniently disposed at a wall of the electrical chamber 11a to provide a deformation avoidance space for the pressure relief mechanism 211. As a result, space utilization of the battery 10 can be improved, the risk of thermal runaway of a battery cell 20 caused by thermal runaway of another battery cell 20 can be reduced, and thus the safety of the battery 10 is improved.

For example, the first wall 21 of the battery cell 20 where the pressure relief mechanism 211 is located facing the isolating component 114 is used as an example in FIG. 2 to FIG. 6, in other words, the isolating component 114 is configured to form at least a part of the second wall 12. Specifically, as shown in FIG. 2 to FIG. 6, the pressure relief mechanism 211 is disposed at the first wall 21 of the battery cell 20, and the first wall 21 is a bottom wall of the battery cell 20. The isolating component 114 serves as at least a part of the second wall 12 of the electrical chamber 11a, and the first wall 21 faces the isolating component 114. In this way, emissions passing through the pressure relief mechanism 211 may be discharged out of the electrical chamber 11a through the isolating component 114. For ease of description, the second wall 12 being the isolating component 114 is mainly used as an example in this embodiment of this application, but this embodiment of this application is not limited thereto.

For example, the second wall 12 may alternatively another wall of the electrical chamber 11a of the box 11. For example, the second wall 12 may alternatively be any wall of the second portion 112.

For another example, as shown in FIG. 2 to FIG. 6, the box 11 further includes at least one beam 113. The beam 113 is located between multiple battery cells 20, and the beam 113 may be configured to enhance structural strength of the box 11. In addition, the beam 113 may further be configured to divide the electrical chamber 11a into at least two electrical sub-chambers. For example, when the box 11 in FIG. 2 to FIG. 6 is provided with one beam 113, the beam 113 may divide the electrical chamber 11a into a left electrical chamber and a right electrical chamber, and this beam 113 may also be considered as a wall of the electrical chamber 11a.

Therefore, the second wall 12 may alternatively be the beam 113, but this embodiment of this application is not limited thereto. Specifically, the beam 113 may be a hollow structure, and the hollow structure may be configured to form the collection chamber 11b, in other words, the beam 113 includes a wall shared by the electrical chamber 11a and the collection chamber 11b. Specifically, the isolating component 114 and the protective component 115 may be configured to form a part of the collection chamber 11b, while the hollow structure of the beam 113 may also be configured to form a part of the collection chamber 11b. In other words, a part of the collection chamber 11b formed by the isolating component 114 and the protective component 115 is in communication with the hollow structure of the beam 113. Therefore, when the pressure relief mechanism 211 is disposed facing the beam 113, to be specific, when the beam 113, as the second wall 12, faces the first wall 21 at which the pressure relief mechanism 211 is located, emissions discharged through the pressure relief mechanism 211 may enter the collection chamber 11b through the beam 113.

It should be understood that for ease of description, the isolating component 114 serving as the second wall 12 is mainly used as an example in this embodiment of this application, but this embodiment of this application is not limited thereto, and relevant descriptions are likewise applicable to cases in which the beam 113 serves as the second wall 12 or a wall of another electrical chamber 11a serves as the second wall 12. For brevity, details are not repeated herein.

In this embodiment of this application, the attachment structure 13 includes the second wall 12, that is, the second wall 12 may be provided with an avoidance region 131, and the avoidance region 131 corresponds to the pressure relief mechanism 211 of at least one battery cell 20, such that the emissions passing through the pressure relief mechanism 211 can be conveniently discharged again through the avoidance region 131 of the second wall 12. A proper setting of the area of the avoidance region 131 on the second wall 12 can make the emissions be discharged quickly in a timely manner and prevent heat diffusion and explosion, thereby improving the safety of the battery 10. Moreover, in a case that the second wall 12 is the isolating component 114, the emissions can be discharged into the collection chamber 11b through the isolating component 14. In addition, when the isolating component 114 is a thermal management component, properly setting the area of the avoidance region 131, for example, setting the area of the avoidance region 131 to be not excessively large can prevent a situation that an excessively large avoidance region 131 results in an excessively small space of a flow channel of the thermal management component for accommodating a fluid while such situation affects temperature adjustment efficiency of the thermal management component.

It should be understood that the avoidance region 131 in this embodiment of this application may be implemented in various manners. For example, as shown in FIG. 2 to FIG. 6, the avoidance region 131 includes a through hole 121 running through the second wall 12 along a thickness direction of the second wall 12, where the through hole 121 is used for allowing the emissions discharged from the pressure relief mechanism 211 to be discharged out of the electrical chamber 11a through the through hole 121 upon actuation of the pressure relief mechanism 211. The avoidance region 131 including the through hole 121 provided in the second wall 12 allows for convenient processing. In addition, the through hole 121 provides a deformation space for the pressure relief mechanism 211 and can also allow the emissions discharged from the pressure relief mechanism 211 to be discharged through the through hole 121 quickly.

Optionally, FIG. 7 is another schematic structural diagram of a battery 10 according to an embodiment of this application. As shown in FIG. 7, unlike the battery 10 shown in FIG. 2, the battery 10 may further include a sealing structure 122. Specifically, as shown in FIG. 7, the second wall 12 is provided with a sealing structure 122, where the sealing structure 122 is configured to seal the through hole 121, and the sealing structure 122 is configured to be damaged upon actuation of the pressure relief mechanism 211 so as to allow the emissions to pass through the through hole 121. With consideration that when the avoidance region 131 includes the through hole 121, the pressure relief mechanism 211 is exposed, so during use of the battery 10, the pressure relief mechanism 211 is susceptible to external environmental influence, thus resulting in failure of the pressure relief mechanism 211. Therefore, with the sealing structure 122 provided, airtightness of the electrical chamber 11a can be maintained and the pressure relief mechanism 211 is protected from external environment influence during normal use of the battery cell 20. In addition, during thermal runaway of the battery cell 20, the sealing structure 122 can be damaged in a timely manner to expose the through hole 121, so that emissions of the battery cell 20 can pass through the through hole 121 to be discharged out of the electrical chamber 11a, preventing thermal runaway, thereby improving the safety of the battery 10.

Optionally, the position of the sealing structure 122 in this embodiment of this application may be set based on practical application. For example, as shown in FIG. 7, the sealing structure 122 is disposed at a surface of the second wall 12 facing the first wall 21, and/or the sealing structure 122 is disposed at a surface of the second wall 12 away from the first wall 21, thus allowing for convenient processing. In addition, as shown in FIG. 7, when the sealing structure 122 is disposed at a surface of the second wall 12 away from the first wall 21, a distance between the pressure relief mechanism 211 and the sealing structure 122 can provide a deformation space for actuation of the pressure relief mechanism 211, thereby avoiding affecting the pressure relief mechanism 211. When the sealing structure 122 is disposed at a surface of the second wall 12 facing the first wall 21, the sealing structure 122 is close to the pressure relief mechanism 211 and can be quickly damaged by emissions of the pressure relief mechanism 211.For example, the sealing structure 122 can be quickly melted through a quick response to temperature of the battery cell 20, thereby avoiding affecting the actuation of the pressure relief mechanism 211 and allowing the emissions to be discharged in a timely manner, for example, the emissions can be discharged into the collection chamber 11b in a timely manner.

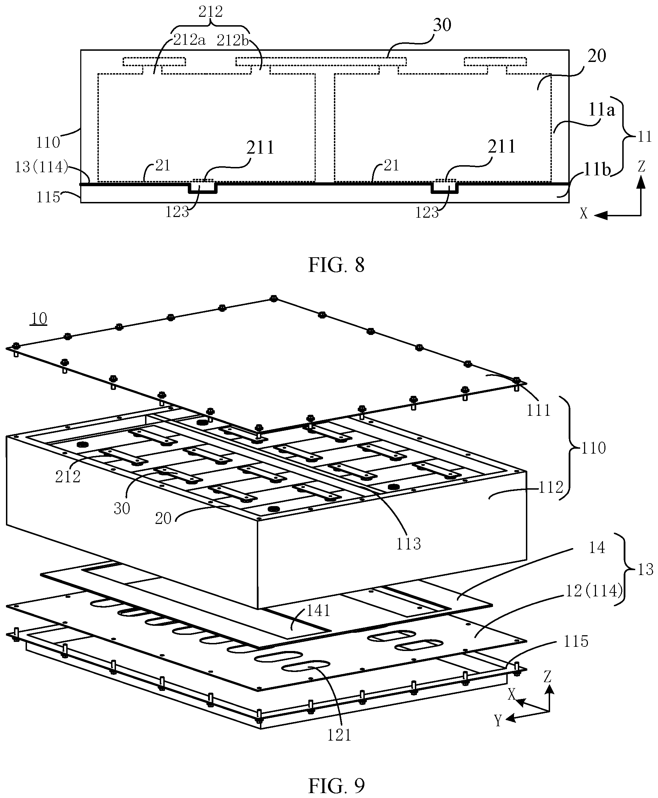

Optionally, the avoidance region 131 in this embodiment of this application may alternatively be implemented in other manners. FIG. 8 is still another schematic structural diagram of a battery 10 according to an embodiment of this application. As shown in FIG. 8, the avoidance region 131 may alternatively be implemented in a form of a groove. Specifically, the avoidance region 131 includes a groove 123, having an opening facing the pressure relief mechanism 211, of the second wall 12, where the groove 123 is used to be damaged upon actuation of the pressure relief mechanism 211, such that the emissions discharged from the pressure relief mechanism 211 pass through the second wall 12 to be discharged out of the electrical chamber 11a. In this way, with the opening of the groove 123 facing the pressure relief mechanism 211, a deformation space can be provided in the groove 123 for the pressure relief mechanism 211, allowing for convenient actuation of the pressure relief mechanism 211 and discharge of the emissions.

It should be understood that when the attachment structure 13 where the avoidance region 131 is located includes the second wall 12, the second wall 12 may be in direct contact with the first wall 21. Alternatively, another structure may be disposed, for example, a connecting structure is disposed between the second wall 12 and the first wall 21 and used for connecting and fixing the second wall 12 and the first wall 21.

FIG. 9 is another schematic structural exploded view of a battery 10 according to an embodiment of this application. As shown in FIG. 9, unlike that shown in FIG. 3, the battery 10 further includes a connecting structure 14, where the connecting structure 14 is disposed between the first wall 21 and the second wall 12, and the attachment structure 13 includes the connecting structure 14. With the connecting structure 14 disposed between the first wall 21 and the second wall 12, relative fixation of the first wall 21 and the second wall 12 as well as airtightness between the first wall 21 and the second wall 12 are implemented through the connecting structure 14 when no thermal runaway occurs in the battery cell 20. In addition, the attachment structure 13 may include the connecting structure 14, to be specific, the connecting structure 14 includes the avoidance region 131, so that the pressure relief mechanism 211 can be prevented from being shielded by the connecting structure 14, thereby allowing for convenient smooth discharge of the emissions.

For example, as shown in FIG. 9, the connecting structure 14 is provided with an avoidance opening 141 corresponding to the pressure relief mechanism 211, where the avoidance region 131 includes the avoidance opening 141. The avoidance opening 141 can provide a deformation space for actuation of the pressure relief mechanism 211, so as to prevent the connecting structure 14 from shielding the pressure relief mechanism 211 while such shielding causes untimely actuation of the pressure relief mechanism 211. In addition, the emissions passing through the pressure relief mechanism 211 can be quickly discharged through the avoidance opening 141.

It should be understood that the connecting structure 14 in this embodiment of this application may be implemented in various manners. For example, the connecting structure 14 is configured to prevent emissions discharged from the pressure relief mechanism 211 from entering the electrical chamber 11a upon actuation of the pressure relief mechanism 211. The connecting structure 14 may serve as a sealing member. Especially upon actuation of the pressure relief mechanism 211, the connecting structure 14 is located between the first wall 21 and the second wall 12, such that the emissions can be prevented from entering the electrical chamber 11a through the connecting structure 14. In this way, the emissions passing through the pressure relief mechanism 211 can be directly discharged out of the electrical chamber 11a after separately passing through the avoidance opening 141 of the connecting structure 14 and the second wall 12, for example, directly discharged into the collection chamber 11b, so that heat diffusion or even explosion caused by a short circuit of the battery cell 20 in the electrical chamber 11a after the emissions enter the electrical chamber 11a is prevented, and centralized collection of the emissions can be achieved, allowing for convenient centralized treatment of the emissions, preventing the emissions from affecting other components in the battery 10, and improving the safety of the battery 10.

For another example, the connecting structure 14 is configured to discharge the emissions discharged from the pressure relief mechanism 211 into the electrical chamber 11a upon actuation of the pressure relief mechanism 211. This reduces airtightness requirements of the connecting structure 14 and allows for convenient implementation. In addition, some of the emissions are discharged into the electrical chamber 11a through the connecting structure 14, and meanwhile some of the emissions pass through the connecting structure 14 and the second wall 12 to be discharged out of the electrical chamber 11a, increasing the discharge speed, reducing the risk of explosion of the battery 10, and also implementing directional and dispersive discharge, thereby preventing the emissions from affecting other components and improving the safety and stability of the battery 10.

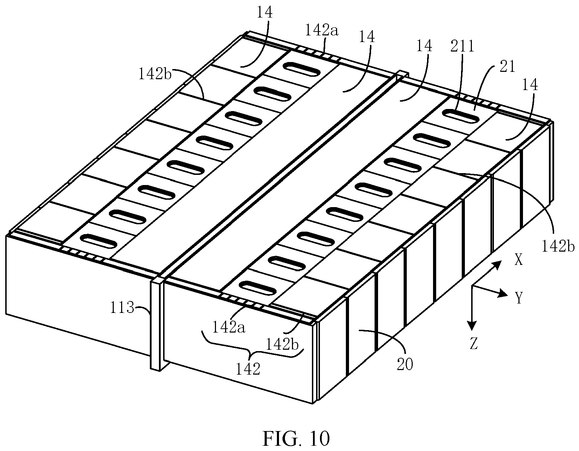

The emissions are discharged into the electrical chamber 11a through the connecting structure 14 in various manners. For example, FIG. 10 is a schematic partial structural diagram of a battery 10 according to an embodiment of this application, the battery 10 shown in FIG. 10 may be the battery 10 shown in FIG. 9, and a direction described in FIG. 10 is opposite to the direction shown in FIG. 9. As shown in FIG. 10, the connecting structure 14 is provided with a flow channel 142. The flow channel 142 is configured to discharge the emissions discharged from the pressure relief mechanism 211 into the electrical chamber 11a upon actuation of the pressure relief mechanism 211. The emissions discharged from the pressure relief mechanism 211 can be discharged into the electrical chamber 11a through the flow channel 142. In this way, a proper position setting of the flow channel 142 can implement directional discharge of the emissions and reduce influence of the emissions on some components in the electrical chamber 11a, thereby improving the safety of the battery 10.

Specifically, as shown in FIG. 10, the flow channel 142 in this embodiment of this application includes a through hole and/or a groove running through the connecting structure 14, allowing for both convenient processing and quick pass of the emissions.

It should be understood that, the size of the flow channel 142 in this embodiment of this application may be set based on practical application. For example, a radial size of the flow channel 142 is less than or equal to 2 mm, and a radial direction of the flow channel 142 is perpendicular to a flowing direction of the emissions in the flow channel 142, thereby avoiding an excessively large size of the flow channel 142, accordingly avoiding an excessively large amount of the emissions flowing through the flow channel 142, also avoiding a large particle size of the emissions flowing through the flow channel 142, and achieving filtration of the emissions. As a result, influence of the emissions of a battery cell 10 experiencing thermal runaway on another battery cell 20 can be reduced, and heat diffusion of the battery 10 is furthest avoided. Specifically, if the flow channel 142 is a through hole, the radial size of the flow channel 142 may be a maximum aperture of the flow channel 142, and if the flow channel 142 is a groove, the radial size of the flow channel 142 may be the depth of the groove or a maximum width of the groove. This embodiment of this application is not limited thereto.

It should be understood that the flow channel 142 may be provided with a filler inside. In this way, a melting point of the filler is properly set, so that the filler can be used to seal the flow channel 142 when the pressure relief mechanism 211 is not actuated and can be damaged upon actuation of the pressure relief mechanism 211, for example, be melted, so as to achieve flow communication in the flow channel 142. Therefore, when no thermal runaway occurs in the battery cell 20, the airtightness of the electrical chamber 11a can be improved, thereby preventing the battery cell 20 being affected or damaged. A material of the filler may be selected based on practical application. For example, the material of the filler may include polystyrene foam and/or plastic, but this embodiment of this application is not limited thereto.

In this embodiment of this application, the flow channel 142 being a groove provided on the connecting structure 14 is used as an example. As shown in FIG. 10, the connecting structure 14 may include multiple flow channels 142. The multiple flow channels 142 may each include: a groove provided on a surface of the connecting structure 14 facing the first wall 21, to be specific, an opening of the groove faces a surface of the first wall 21; and/or a groove provided on a surface of the connecting structure 14 facing the second wall 12, to be specific, an opening of the groove faces the second wall 12. For example, in FIG. 10, the flow channel 142 being the groove on the surface of the connecting structure 14 facing the second wall 12 is used as an example, to be specific, the opening of the groove faces the second wall 12.

In some embodiments, the connecting structure 14 is provided with multiple flow channels 142 extending along at least one direction, where the at least one direction is parallel to the first wall 21. In other words, a larger surface of the connecting structure 14 is provided with multiple flow channels 142 extending along one or multiple directions. The provision of the multiple flow channels 142 can achieve dispersion of discharge directions of the emissions, thereby avoiding damage to a component in a single direction when high-temperature emissions are discharged in this single direction.

It should be understood that, an extension direction of the flow channel 142 in this embodiment of this application may be set based on practical application. For example, the extension direction of the flow channel 142 may be set properly based on a positional relationship between an electrode terminal 212 and the pressure relief mechanism 211 of the battery cell 20, thereby preventing influence of the emissions on the electrode terminal 212 and a busbar 30 connected to the electrode terminal 212.

For example, as shown in FIG. 10, if the electrode terminal 212 and the pressure relief mechanism 211 are not located at a same wall, and a wall at which the electrode terminal 212 is located does not intersect with the first wall 21, for example, if the wall at which the electrode terminal 212 is located is disposed opposite the first wall 21, the extension direction of the flow channel 142 may not be limited. For example, the flow channel 142 may include: one or more first flow channels 142a disposed at the connecting structure 14 and extending along a first direction X; and/or one or more second flow channels 142b disposed at the connecting structure 14 and extending along a second direction Y Alternatively, the flow channel 142 may further include a flow channel disposed at the connecting structure 14 in another direction. This embodiment of this application is not limited thereto. The first direction X is perpendicular to the second direction Y For example, as shown in FIG. 10, the first direction X may be a thickness direction of the battery cell 20. In addition, a height direction Z of the battery cell 20 in this embodiment of this application is perpendicular to the first direction X and the second direction Y

For another example, unlike that shown in FIG. 10, if the electrode terminal 212 is located at another wall, for example, if the electrode terminal 212 is located at a wall intersecting with the first wall 21 or the electrode terminal 212 is located at the first wall 21, a direction of the flow channel 142 may be properly set to avoid influence of the emissions on the electrode terminal 212, for example, to avoid a short circuit between different busbars 30 connected to the electrode terminal 212 caused by metal fragments in the missions, thereby improving the safety of the battery 10.

Optionally, the connecting structure 14 may alternatively be disposed in other manners. For example, the connecting structure 14 is configured to be damaged upon actuation of the pressure relief mechanism 211, such that a gap is formed between the first wall 21 and the second wall 12, where the gap is used for discharging the emissions discharged from the pressure relief mechanism 211 into the electrical chamber 11a. The material of the connecting structure 14 is properly selected to obtain an appropriate melting point of the connecting structure 14, allowing the connecting structure 14 to be damaged upon actuation of the pressure relief mechanism 211 to form a gap, such that the emissions are discharged into the electrical chamber 11a. In this way, the connecting structure 14 does not need to be provided with an additional structure, achieving higher simplicity and also guaranteeing the airtightness of the battery cell 20 during normal use.

Specifically, the connecting structure 14 in this embodiment of this application being damaged may include: at least a part of the connecting structure 14 being damaged. For example, upon actuation of the pressure relief mechanism 211, only the outside of the connecting structure 14 may be damaged, and a part of an internal component exposed from the connecting structure 14 is not damaged. Alternatively, an internal structure of the connecting structure 14 is damaged, for example, the connecting structure 14 may be a multi-layer structure, and a structural layer in the multi-layer structure is partially damaged. Alternatively, the entire connecting structure 14 may be damaged. This embodiment of this application is not limited thereto.

It should be understood that the connecting structure 14 in this embodiment of this application may be disposed based on practical application. For example, the connecting structure 14 may include at least one of a bracket, a heat conducting gasket, a sealing gasket, and an adhesive that are disposed between the first wall 21 and the second wall 12. Specifically, the connecting structure 14 may include a bracket disposed between the first wall 21 and the second wall 12, for supporting and fixing the battery cell 20.

Alternatively, the connecting structure 14 may include a heat conducting gasket disposed between the first wall 21 and the second wall 12, so that heat dissipation of the battery cell 20 is implemented through the heat conducting gasket during use of the battery 10. For example, when the second wall 12 is a thermal management component, heat of the battery cell 20 can be transferred to the thermal management component through the heat conducting gasket, and temperature of the battery cell 20 is adjusted in a timely manner to ensure normal use of the battery cell 20. For example, as shown in FIG. 10, the connecting structure 14 may include a heat conducting gasket, where the heat conducting gasket may be a portion provided with multiple Y-direction second flow channels 142b extending along the second direction Y in the figure.

Optionally, the connecting structure 14 may include a sealing gasket disposed between the first wall 21 and the second wall 12, for improving the airtightness between the first wall 21 and the second wall 12. For example, as shown in FIG. 10, the connecting structure 14 may include a sealing gasket, where the sealing gasket may be a portion provided with multiple first flow channels 142a extending in the first direction X in the figure.

Optionally, the connecting structure 14 may include an adhesive disposed between the first wall 21 and the second wall 12, for fixedly adhering the battery cell 20 to the second wall 12. For example, the adhesive included by the connecting structure 14 may be used for fixing the battery cell 20 to the second wall 12.

It should be understood that the heat conducting gasket, the sealing gasket, and the adhesive may be used alone or used in combination. For example, as shown in FIG. 10, the sealing gasket may be disposed at an edge of at least one side of the heat conducting gasket. For example, the sealing gasket may be disposed at edges of two opposite sides of the heat conducting gasket respectively, not only for heat dissipation, but also for improving the airtightness between the first wall 21 and the second wall 12. In addition, the adhesive may be used for fixing the sealing gasket and the heat conducting gasket to the battery cell 20 or to the second wall 12, thereby improving the stability of the battery 10.

It should be understood that, the material of the heat conducting gasket, the material of the sealing gasket, and the material of the adhesive in this embodiment of this application may be set based on practical application. For example, the material of the heat conducting gasket may include thermal conductive silicone. For another example, the material of the sealing gasket includes at least one of the following: silicone rubber, polypropylene (polypropylene, PP), polyfluoroalkoxy (Polyfluoroalkoxy, PFA), and polyimide (Polyimide, PI). For example, the material of the adhesive includes at least one of the following: epoxy-type structural adhesive, acrylate structural adhesive, polyimide structural adhesive, maleimide structural adhesive, polyurethane structural adhesive, and acrylic glue. For another example, the material of an adhesive layer includes a polymer adhesive and a heat conducting material. The material of the polymer adhesive includes at least one of the following: epoxy resin, organic silicone, and polyimide. The heat conducting material includes at least one of the following: Al2O3, ZnO, BeO, AlN, Si3N4, BN, SiC, B4C, carbon nanotubes, and nano graphite flakes. This embodiment of this application is not limited thereto.

In this embodiment of this application, the pressure relief mechanism 211 is disposed at the first wall 21 of the battery cell 20, the attachment structure 13 attached to the first wall 21 is provided with the avoidance region 131, and the avoidance region 131 satisfies 0.3≤S2/(n*S1)≤8.5. Therefore, the safety of the battery 10 can be improved by a proper setting of the area of the avoidance region 131.

Specifically, an excessively small S2/(n*S1), for example, being less than 0.3, may result in a large area of the pressure relief mechanism 211 but a small area of the avoidance region 131 corresponding to the pressure relief mechanism 211. This may cause that the avoidance region 131 fails to provide a sufficient deformation space for the pressure relief mechanism 211, causing the pressure relief mechanism 211 to be at least partially shielded by the avoidance region 131 and unable to act normally, and accordingly causing a failure in timely discharge of internal emissions of the battery cell 20. In addition, in a case that the pressure relief mechanism 211 can act normally, a small area of the avoidance region 131 may cause that the emissions cannot be quickly discharged through the avoidance region 131, to be specific, there is a difficulty in discharging emissions at the avoidance region 131, and this also causes a failure in timely discharge of the internal emissions of the battery cell 20. Therefore, such two cases may both cause heat diffusion after thermal runaway of the battery cell 20, and even cause explosion of the battery 10, compromising the safety of the battery 10.

On the contrary, an excessively large S2/(n*S1), for example, being greater than 8.5, may result in an excessively small area of the pressure relief mechanism 211 or an excessively large area of the avoidance region 131 corresponding to the pressure relief mechanism 211. An excessively small area of the pressure relief mechanism 211 results in the internal emissions of the battery cell 20 not being discharged out of the battery cell 20 quickly and in a timely manner. This in turn may lead to thermal runway within the battery cell 20, causing heat diffusion and resulting in an explosion of the battery 10, compromising the safety of the battery 10. An excessively large area of the avoidance region 131 reduces stiffness and strength of the attachment structure 13 where the avoidance region 131 is located and affects performance of the attachment structure 13, for example, may affect support of the attachment structure 13 for the battery cell 10.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A battery, **characterized by** comprising:
a box (11) comprising an electrical chamber (11a);
a battery cell (20) accommodated in the electrical chamber (11a), wherein a pressure relief mechanism (211) is disposed at a first wall (21) of the battery cell (20); and
an attachment structure (13) attached to the first wall (21), wherein the attachment structure (13) is provided with an avoidance region (131), the avoidance region (131) is configured to provide a deformation space for the pressure relief mechanism (211) of at least one battery cell (20), and the avoidance region (131) satisfies 0.3≤S2/(n*S1)≤8.5,
wherein S1 represents a projection area of the pressure relief mechanism (211) in a direction perpendicular to the first wall (21), S2 represents a projection area of the avoidance region (131) in the direction perpendicular to the first wall (21), n represents the number of pressure relief mechanisms (211) corresponding to the avoidance region (131), and n is a positive integer.

2. The battery according to claim 1, **characterized in that** the avoidance region (131) satisfies 0.8≤S2/(n*S1)≤4.

3. The battery according to claim 1 or 2, **characterized in that** a value range of the projection area S1 of the pressure relief mechanism (211) in the direction perpendicular to the first wall (21) is [50 mm², 3000 mm²].

4. The battery according to any one of claims 1 to 3, **characterized in that** the projection area S2 of the avoidance region (131) in the direction perpendicular to the first wall (21) satisfies 50 mm²≤S2/n≤10000 mm².

5. The battery according to any one of claims 1 to 4, **characterized in that** the avoidance region (131) corresponds to multiple pressure relief mechanisms (211).

6. The battery according to any one of claims 1 to 5, **characterized in that** the electrical chamber (11a) comprises a second wall (12), wherein the first wall (21) faces the second wall (12).

7. The battery according to claim 6, **characterized in that** the attachment structure (13) comprises the second wall (12).

8. The battery according to claim 7, **characterized in that** the avoidance region (131) comprises a through hole (121) running through the second wall (12) along a thickness direction of the second wall (12), wherein the through hole (121) is used for allowing emissions discharged from the pressure relief mechanism (211) to be discharged out of the electrical chamber (11a) through the through hole (121) upon actuation of the pressure relief mechanism (211).

9. The battery according to claim 8, **characterized in that** the second wall (12) is provided with a sealing structure (122), wherein the sealing structure (122) is configured to seal the through hole (121), and the sealing structure (122) is configured to be damaged upon actuation of the pressure relief mechanism (211) so as to allow the emissions to pass through the through hole (121).

10. The battery according to claim 9, **characterized in that** the sealing structure (122) is disposed at a surface of the second wall (12) facing the first wall (21), and/or
the sealing structure (122) is disposed at a surface of the second wall (12) away from the first wall (21).

11. The battery according to any one of claims 7 to 10, **characterized in that** the avoidance region (131) comprises a groove (123), having an opening facing the pressure relief mechanism (211), of the second wall (12), wherein the groove (123) is used to be damaged upon actuation of the pressure relief mechanism (211), such that the emissions discharged from the pressure relief mechanism (211) pass through the second wall (12) to be discharged out of the electrical chamber (11a).

12. The battery according to any one of claims 6 to 11, **characterized in that** the battery further comprises:
a connecting structure (14), wherein the connecting structure (14) is disposed between the first wall (21) and the second wall (12), and the attachment structure (13) comprises the connecting structure (14).

13. The battery according to claim 12, **characterized in that** the connecting structure (14) is provided with an avoidance opening (141) corresponding to the pressure relief mechanism (211), wherein the avoidance region (131) comprises the avoidance opening (141).

14. The battery according to claim 12 or 13, **characterized in that** the connecting structure (14) is configured to prevent emissions discharged from the pressure relief mechanism (211) from entering the electrical chamber (11a) upon actuation of the pressure relief mechanism (211).

15. The battery according to claim 12 or 13, **characterized in that** the connecting structure (14) is configured to discharge emissions discharged from the pressure relief mechanism (211) into the electrical chamber (11a) upon actuation of the pressure relief mechanism (211).

16. The battery according to claim 15, **characterized in that** the connecting structure (14) is provided with a flow channel (142), wherein the flow channel (142) is configured for discharging the emissions discharged from the pressure relief mechanism (211) into the electrical chamber (11a) upon actuation of the pressure relief mechanism (211).

17. The battery according to claim 15 or 16, **characterized in that** the connecting structure (14) is configured to be damaged upon actuation of the pressure relief mechanism (211), such that a gap is formed between the first wall (21) and the second wall (12), wherein the gap is used for discharging the emissions discharged from the pressure relief mechanism (211) into the electrical chamber (11a).

18. The battery according to any one of claims 6 to 17, **characterized in that** the battery further comprises:
a collection chamber (11b) for collecting emissions from the battery cell (20) upon actuation of the pressure relief mechanism (211).

19. The battery according to claim 18, **characterized in that** the battery further comprises:
an isolating component (114) configured to isolate the electrical chamber (11a) from the collection chamber (11b).

20. The battery according to claim 19, **characterized in that** the isolating component (114) is formed as at least a part of the second wall (12).

21. An electric device, **characterized by** comprising:
the battery according to any one of claims 1 to 20, wherein the battery is configured to supply electrical energy to the electric device.
